Europäisches Patentamt

European Patent Office

Office européen des brevets

(19)

(11) **EP 0 779 372 B1**

(12) **EUROPÄISCHE PATENTSCHRIFT**

(45) Veröffentlichungstag und Bekanntmachung des Hinweises auf die Patenterteilung:
**05.06.2002 Patentblatt 2002/23**

(51) Int Cl.⁷: **C22C 9/00**, H01B 1/02

(21) Anmeldenummer: **96116107.2**

(22) Anmeldetag: **08.10.1996**

(54) **Oberleitungsfahrdraht einer elektrischen Hochgeschwindigkeitsbahnstrecke und Verfahren zu dessen Herstellung**

Overhead contact wire for high speed electrical railways and process for manufacturing the same

Fil conducteur aérien pour chemins de fer électriques à grande vitesse et procédé pour sa fabrication

(84) Benannte Vertragsstaaten:
**AT BE CH DE ES FR GB IT LI NL SE**

(30) Priorität: **20.10.1995 DE 19539174**

(43) Veröffentlichungstag der Anmeldung:
**18.06.1997 Patentblatt 1997/25**

(73) Patentinhaber: **SIEMENS AKTIENGESELLSCHAFT**
**80333 München (DE)**

(72) Erfinder:
• **Kuhrt, Christian, Dr.**
**91334 Hemhofen (DE)**
• **Fink, Arno**
**91058 Erlangen (DE)**

(56) Entgegenhaltungen:
EP-A- 0 569 036       EP-A- 0 702 375
WO-A-94/10349       DE-A- 4 321 921
GB-A- 1 353 430       JP-A- 3 056 633

**Beschreibung**

Die Erfindung bezieht sich auf einen Fahrdraht der Oberleitung einer elektrischen Hochgeschwindigkeitsbahnstrecke, welcher aus einer 3-komponentigen, aushärtbaren CuCr-Legierung besteht und eine Zugfestigkeit ($R_m$) von mindestens 500 MPa und eine elektrische Leitfähigkeit ($\kappa$) von mindestens 60 %, bezogen auf die von geglühtem reinen Kupfer gemäß International Annealed Copper Standard (IACS), aufweist. Die Erfindung betrifft ferner ein Verfahren zur Herstellung eines solchen Oberleitungsfahrdrahtes. Ein derartiger Oberleitungsfahrdraht und ein entsprechendes Herstellungsverfahren gehen aus der EP 0 569 036 A hervor.

Auf Hochgeschwindigkeitsbahnstrecken ist für eine sichere Energiezufuhr über ein Oberleitungssystem eine hohe mechanische Vorspannung des Fahrdrahtes eine unverzichtbare Voraussetzung. An den Fahrdrahtwerkstoff werden somit höchste Anforderungen bezüglich seiner mechanischen Zugfestigkeit $R_m$ bei gleichzeitig hoher elektri-scher Leitfähigkeit $\kappa$ gestellt.

Gegenwärtig wird für den Fahrdraht der Regeloberleitung Re250 der Deutschen Bahn AG mit Rillenprofil und 120 mm$^2$ Durchmesser eine CuAg-Legierung mit einem Ag-Anteil von 0,1 Gew.-% Ag-Anteil verwendet. Diese Legie-rung weist eine Zugfestigkeit $R_m$ von etwa 350 MPa(N/mm$^2$) auf bei einer Leitfähigkeit $\kappa$ von etwa 95 %, bezogen auf die von geglühtem reinen Cu gemäß IACS (International Annealed Copper Standard). Der Fahrdraht ist für einen Regelbetrieb mit Fahrgeschwindigkeiten von höchstens 250 km/h ausgelegt. Er ist unter Berücksichtigung einer unvermeidbaren Abnutzung mit 125 MPa vorgespannt, d.h. mit etwa 36 % seiner Zugfestigkeit K bzw. einer Sicherheitsmarge gegen Bruch von etwa 2,8 (vgl. "Elektrische Bahnen", 80. Jg., 1982, H. 4, Seiten 119 bis 125 oder "Eisenbahntechnische Rundschau", Bd. 35, H. 9, Sept. 1986, Seiten 593 bis 599). Diese Vorspannung wurde für eine Hochgeschwindigkeitsfahrt mit über 400 km/h kurzfristig auf 175 MPa erhöht. ("Elektrische Bahnen", 86. Jg., 1988, H. 9, Seiten 268 bis 289).

Zur Auslegung der Oberleitung für einen Regelbetrieb mit Hochgeschwindigkeiten von über 300 km/h wird eine Fahrdrahtvorspannung von bis zu 200 MPa gefordert. Dies bedingt unter Zugrundelegung der vorgenannten Sicherheitsmarge eine Fahrdrahtlegierung mit einer Mindestzugfestigkeit $\kappa$ von etwa 500 MPa. Die Zugfestigkeit wird dabei durch Zugversuche nach DIN 50145/46 bestimmt (vgl. das Buch "Werkstoffe in der Elektrotechnik" von H. Fischer, 3. Auflage, G. Hanser Verlag München Wien, 1987, Seiten 113 bis 121). Hierbei besteht jedoch das Problem, daß mit einer Zulegierung von Zusatzkomponenten zu der Cu-Legierung zum Zweck der Erhöhung der Zugfestigkeit durch entsprechende Ausscheidungen vielfach die elektrische Leitfähigkeit der Legierung zu stark herabgesetzt wird.

Eine Mindestzugfestigkeit in der genannten Größenordnung kann z.B. mit aus der genannten EP-A zu entnehmenden Cu-Legierungen erreicht werden. Gemäß einem speziellen Ausführungsbeispiel setzt sich eine dieser Legierungen aus den Komponenten Cr (0,1 bis 1 %), Zr (0,01 bis 0,3 %), Mg (0,001 bis 0,05 %), O (maximal 10 ppm) und Cu (Rest) unter Einschluß unvermeidbarer Verunreinigungen zusammen. Die gewählte Zusammensetzung der Legierung bedingt dabei, daß ein aus den erschmolzenen Komponenten gewonner Gießstrang nach einem Warm-walzen zu einem Ausgangsdraht entweder durch Eintauchen in ein Wasseroder Ölbad sehr rasch abgekühlt werden muß oder nach einer langsameren Luftabkühlung anschließend einer zusätzlichen Wärmebehandlung (Lösungsglühung) mit Raschabkühlung unterzogen werden muß. Der so gewonnene Vorkörper wird dann mehreren Kaltverformungen unterzogen, die von Ausscheidungsglühungen unterbrochen sind. Wegen der generell notwendigen raschen Abkühlung des Vorprodukts von der Lösungstemperatur (860 - 1000°C) ist das bekannte Verfahren verhältnismäßig aufwendig und deshalb für eine kommerzielle Drahtfertigung wenig geeignet.

Aus der US-PS 4,755,235 ist ferner ein elektrischer Draht aus einer ausscheidungsgehärteten Cu-Legierung mit Cr (0,05 bis 1,5 Gew.-%), Zr (0,05 bis 0,5 Gew.-%) und Mg (0,005 bis 0,1 Gew.-%) zu entnehmen. Auch hier soll eine Legierungsschmelze rasch abgekühlt werden (innerhalb 1 bis 2 Minuten von etwa 1200°C auf Raumtemperatur).

Aus dem JP-Abstract zur JP 03-56633 A ist darüber hinaus ein Draht für einen Oberleitungsbus aus einer Cu-Legierung zu entnehmen, deren Hauptkomponenten neben Cu noch Zr (0,001 bis 0,15 Gew.-%) und Cr (0,01 bis 0,3 Gew.-%) sind. Diese Legierung kann neben einem geringen Anteil an Verunreinigungselementen gegebenenfalls auch bis zu 0,5 Gew.-% Zn enthalten.

Aufgabe der vorliegenden Erfindung ist es, einen für eine Hochgeschwindigkeitsstrecke geeigneten Oberleitungsfahrdraht mit den eingangs genannten Merkmalen aus einem Material anzugeben, das einerseits die genannten Mindestanforderungen bezüglich der mechanischen Zugfestigkeit $R_m$ und der elektrischen Leitfähigkeit $\kappa$ erfüllt und das andererseits eine gegenüber den bekannten Verfahren vereinfachte Herstellung des Drahtes ermöglicht.

Diese Aufgabe wird erfindungsgemäß dadurch gelöst, daß eine 3-komponentige, aushärtbare $Cu_aCr_bX_c$-Le-gierung vorgesehen ist, wobei X ein Element aus der Gruppe der Elemente Al, Ni, Zn, In und Sn ist und für die Komponenten gelten soll (jeweils in Gew.-%) :

$$0{,}2 \leq b \leq 0{,}8,$$

$$0,01 \leq c \leq 0,4,$$

mit

$$a + b + c \cong 100$$

unter Einschluß unvermeidbarer Verunreinigungselemente.

Die Erfindung geht dabei von der Erkennntnis aus, daß mit der Wahl der Zulegierung der besonderen X-Komponente zu einer CuCr-Legierung vorteilhaft auf eine besondere Behandlung des Draht-Vorproduktes in Form einer raschen Abkühlung von der Schmelz- bzw. Lösungstemperatur verzichtet werden kann. Ein aus der erfindungsgemäßen Legierung erschmolzenes, dann in üblicher Weise normal, z.B. von 1200°C auf Raumtemperatur in 5 bis 10 min, abgekühltes und gegebenenfalls noch beispielsweise durch Warmwalzen vorverformtes Ausgangsprodukt bzw. Drahtvorprodukt braucht also nur noch kaltverformt und ausgelagert zu werden, um einen Draht mit den gewünschten Eigenschaften zu erhalten. Es wurde erkannt, daß die für die X-Komponente zu wählenden Materialien vorteilhaft die Streckgrenze der Cu-Legierung erhöhen und die Umformbarkeit des Drahtvorproduktes verbessern. Diese Eigenschaften sind insbesondere von Bedeutung, wenn bei der Herstellung des Drahtes ein Kaltverformen in mindestens einem Schritt, insbesondere in nur 2 bis 3 Schritten, vorgesehen werden soll.

Besonders vorteilhaft wird als X-Komponente A1 oder In gewählt. Die entsprechende Cu-Legierung zeichnet sich durch verhältnismäßig hohe Zugfestigkeitswerte $R_m$ und verhältnismäßig hohe Werte der 0,01 %-Dehnungsgrenze (= technische Elastizitätsgrenze) aus.

Eine weitere Verbesserung dieser Eigenschaften ist mit einer Zulegierung von Zr mit einem Anteil zwischen 0,02 und 0,4 Gew.-% zu erreichen.

Außerdem ist es vorteilhaft, wenn der erfindungsgemäße Draht als weitere Komponente Si mit einem Anteil von höchstens 0,1 Gew.-% enthält. Denn durch ein entsprechendes Geringhalten oder sogar durch eine Vermeidung eines Si-Anteils läßt sich so eine unerwünschte Verminderung der elektrischen Leitfähigkeit $\kappa$ zumindest weitgehend ausschließen (vgl. z.B. das genannte Buch "Werkstoffe in der Elektrotechnik", Seite 172).

Das erfindungsgemäße Herstellungsverfahren ist dadurch gekennzeichnet, daß zunächst ein Drahtvorprodukt erstellt wird, wobei die Cu-Legierung erschmolzen und anschließend mit einer Abkühlrate von unter 100°C/s abgekühlt wird, darauf das Drahtvorprodukt mittels mindestens einer Kaltverformung in ein Drahtzwischenprodukt überführt wird, dann das Drahtzwischenprodukt mindestens einer Auslagerungswärmebehandlung unterzogen wird und gegebenenfalls die Schritte der Kaltverformung und/oder der Auslagerungsbehandlung mindestens noch einmal wiederholt werden, wobei mit der letzten Kaltverformung die Endform des Drahtes erzeugt wird. Dabei kann das Drahtvorprodukt unmittelbar aus der Schmelze der Cu-Legierung gegossen werden. Es ist aber auch möglich, ein aus der langsam erstarrten Schmelze ausgebildetes Ausgangsprodukt mittels mindestens einer Vorverformung in das Drahtvorprodukt zu überführen. Im Gegensatz zu einer Raschabkühlung mit charakteristischen Abkühlraten bei etwa 100°C/s und höher, wie sie bei bekannten Verfahren vorgesehen wird, soll bei dem erfindungsgemäßen Verfahren die Schmelze mit vergleichsweise kleinerer Abkühlrate, insbesondere mit höchstens 20°C/s in dem wichtigen Temperaturbereich von der Schmelztemperatur auf etwa 700°C, abgekühlt werden. Unterhalb von 700°C kann die Abkühlrate noch deutlich geringer sein und beispielsweise bei 5°C/s liegen. Solche Abkühlraten lassen sich ohne größeren Aufwand realisieren, so daß das erfindungsgemäße Verfahren vorteilhaft entsprechend einfach durchzuführen ist. Die Auslagerungswärmebehandlung wird in an sich bekannter Weise bei erhöhter Temperatur und über einen solchen Zeitraum durchgeführt, daß sich die für eine Härtung des Materials erforderlichen Ausscheidungen an den mit der Kaltverformung erzeugten Versetzungsstrukturen ausbilden.

Vorteilhafte Weiterbildungen des Oberleitungsfahrdrahtes und des Verfahrens zu seiner Herstellung gehen aus den jeweils abhängigen Ansprüchen hervor.

Die Erfindung wird nachfolgend anhand von Ausführungsbeispielen noch weiter erläutert.

Zur Herstellung eines Oberleitungsfahrdrahtes aus einer Cu-Legierung mit der erfindungsgemäßen Zusammensetzung wird zunächst das Material aus den einzelnen Komponenten vorzugsweise in einer Schutzgasatmosphäre wie z.B. unter Ar erschmolzen. Der Sauerstoffgehalt in der Schmelze sollte nämlich möglichst niedrig sein und vorzugsweise unter 100 ppm liegen. Um eine gute Homogenität der Schmelze zu gewährleisten, muß über den Schmelzpunkt von Cu (1084°C), insbesondere auf mindestens 1200°C erhitzt werden. Gegebenenfalls kommen noch höhere Temperaturen in Frage. Deswegen wird vorteilhaft ein Induktionsschmelzen vorgesehen. Die Schmelze wird dann mit einer Abkühlgeschwindigkeit bzw. -rate (in °C/min) abgekühlt, die in dem für die Ausbildung des ausscheidungsgehärteten Materials wichtigen Temperaturbereich zwischen der Schmelztemperatur und etwa 700°C deutlich unterhalb der für eine rasche Abkühlung charakteristischen Abkühlraten von mindestens etwa 100°C/s liegt. So kommen insbesondere Abkühlraten von höchstens 20°C/s in dem genannten Temperaturbereich in Frage. Solche Abkühlraten lassen sich beispielsweise durch ein einfaches Abgießen in eine wassergekühlte Kokille unter Luft oder in einer Schutzgasatmosphäre realisieren. Auf ein Abschrecken in einem Wasser- oder Ölbad kann also vorteilhaft verzichtet werden. Das direkte Abgießen der Schmelze zu einem Vordraht mit z.B. 20 bis 30 mm Durchmesser mittels Abziehens der Schmelze durch eine wassergekühlte, horizontal gelagerte Kokille ist hier besonders geeignet.

Die gegebenenfalls zu Blöcken oder Barren abgegossene Schmelzmasse kann dann noch umgeschmolzen werden, um daraus ein hinsichtlich der Drahtform geeigneteres Drahtvorprodukt zu schaffen. Darüber hinaus läßt sich die abgekühlte Schmelzmasse durch ein Warmwalzen zu einem Drahtvorprodukt als ein Vordraht verarbeiten. Das Warmwalzen kann sich auch in einem kontinuierlichen Schritt, einem sogenannten Gießwalzen, unmittelbar an das Erschmelzen der Cu-Legierung anschließen. Ferner ist auch ein Umschmelzen der abgekühlten Schmelzmasse zu einem Barren möglich, der z.B. durch Strangpressen zu einem Vordraht verarbeitet wird. Aus einem entsprechenden Barren können auch stiftartige Körper herausgearbeitet werden, die dann z.B. durch Rundhämmern zu einem Vordraht verformt werden. Der Vordrahtquerschnitt sollte dabei so eingestellt werden, daß bei der sich anschließenden mindestens einen Kaltverformung eine Querschnittsreduktion von 50 bis 99 %, vorzugsweise von 60 bis 95 %, erfolgt, um so den gewünschten Endquerschnitt des Oberleitungsfahrdrahtes zu erhalten.

Das vielfach auch als Vordraht bezeichnete Drahtvorprodukt wird anschließend einer ersten Kaltverformung unterzogen. Eine solche Kaltverformung kann z.B. durch Pressen oder Walzen oder Hämmern, insbesondere durch Ziehen, vorgenommen werden. Der Verformungsgrad liegt dabei im allgemeinen zwischen 20 und 80 %, vorzugsweise zwischen 40 und 70 %. Beispielsweise werden drei Ziehschritte mit einer Querschnittsreduktion von 38 % bis 34 % (1. Schritt) bzw. von 34 % bis 30 % (2. Schritt) bzw. von 26 % bis 24 % (3. Schritt) gewählt. Mit dieser Kaltverformung werden in dem so zu erhaltenden Drahtzwischenprodukt in bekannter Weise Versetzungsstrukturen erzeugt, die Voraussetzung für eine hinreichende Härtung des Materials sind.

Dem ersten Kaltverformungsschritt schließt sich dann eine erste Auslagerungswärmebehandlung des Drahtzwischenproduktes an, die vorteilhaft bei einer Temperatur zwischen 350°C und 600°C, vorzugsweise zwischen 450°C und 500°C, durchgeführt wird. Mit dieser Wärmebehandlung wird eine Härtung des Materials aufgrund von Ausscheidungen an den mit der Kaltverformung erzeugten Versetzungsstrukturen erreicht. Die Dauer dieser Wärmebehandlung liegt im allgemeinen zwischen 10 Minuten und 10 Stunden. Bei großen Chargen sind dabei erhebliche Aufheiz- und Abkühlzeiten zu berücksichtigen.

Die Verarbeitungsschritte der Kaltverformung und/oder Härtung durch Wärmebehandlung werden zweckmäßigerweise wiederholt, wobei vorteilhaft mit einer Kaltverformung abgeschlossen wird, um das gewünschte Endprodukt des Oberleitungsfahrdrahtes im hartgezogenen Zustand zu erhalten. Wenn diese letzte Kaltverformung in nur einem Schritt vorgenommen werden soll, dann sollte die hier zu wählende Querschnittsreduktion nicht über 20 % bis 22 % betragen. Selbstverständlich kann sich aber jede Kaltverformung, also insbesondere auch die letzte Kaltverformung, aus mehreren Kaltverformungsschritten zusammensetzen.

Hinsichtlich einer möglichst einfachen Herstellung des Oberleitungsfahrdrahtes kann man gegebenenfalls auch eine nur einstufige Kaltverformung vorsehen. Der Verformungsgrad liegt hier natürlich höher.

Für den so herzustellenden Oberleitungsfahrdraht wird erfindungsgemäß eine mindestens 3-komponentige Cu-Legierung der Zusammensetzung $Cu_aCr_bX_c$ vorgesehen. Um eine Mindestfestigkeit $R_m$ von 500 MPa und eine elektrische Leitfähigkeit $\kappa$ von mindestens 60 % IACS gewährleisten zu können, sollen für die einzelnen Komponenten folgende Anteile (jeweils in Gew.-%) gewählt werden:

$$0{,}2 \leq b \leq 0{,}8,$$

$$0{,}01 \leq c \leq 0{,}4$$

und

$$a + b + c = 100 - \delta,$$

wobei $\delta$ durch den Einschluß unvermeidbarer Verunreinigungselemente in der Legierung bestimmt ist. Dieser Anteil $\delta$ an Verunreinigungselementen liegt im allgemeinen unter 100 ppm pro Verunreinigungselement.

Die Cu-Legierung des erfindungsgemäßen Oberleitungsfahrdrahtes soll als X-Komponente zumindest eines der Elemente aus der Gruppe Al, Ni, Zn, In und Sn mit einem Anteil zwischen 0,01 und 0,4 Gew.-%, vorzugsweise zwischen 0,02 und 0,2 Gew.-% enthalten. Diese Elemente, die im wesentlichen auch nach der Wärmebehandlung im Cu gelöst bleiben, sind insbesondere unter den folgenden zwei Gesichtspunkten von Vorteil:

1) Das Material besitzt gegenüber der nur 2-komponentigen CuCr-Legierung eine verbesserte Kaltumformbarkeit.
2) Der Kaltverfestigungsgrad während der abschließenden Kaltumformung ist vergleichsweise höher, so daß eine gegenüber der 2-komponentigen Legierung erhöhte Elastizitätsgrenze erreicht wird. Diese Vorteile kommen insbesondere bei einer nur einstufigen Kaltverformung zum Tragen.

Darüber hinaus kann vorteilhaft zu der $Cu_aCr_bX_c$-Legierung als weitere Komponente Zr hinzulegiert sein, und zwar mit einem Anteil an der Gesamtlegierung zwischen 0,02 und 0,4 Gew.-%, vorzugsweise von höchstens 0,2 Gew.-%. Mit dieser zusätzlichen Komponente Zr ist eine weitere Verbesserung der Kaltumformbarkeit und Erhöhung der Elastizitätsgrenze zu erreichen.

Im Hinblick auf die geforderten Materialeigenschaften und die verhältnismäßig einfache Verarbeitungsmöglichkeit zu einem Oberleitungsfahrdraht ist es ferner als besonders vorteilhaft anzusehen, wenn der Anteil c der X-Komponente mindestens 0,05 Gew.-% beträgt. Offenbar hält dann der X-Zusatz auch die Komponente Cr und, falls als weitere Komponente Zr vorgesehen sein sollte, auch diese Komponente während der verhältnismäßig langsamen Abkühlungsphase der Schmelze in Lösung. Zugleich wird vorteilhaft ein Anteil b der Cr-Komponente gewählt, der mindestens 0,3 Gew.-% beträgt und vorteilhaft unter 0,6 Gew.-% liegt. Im Falle des Vorhandenseins der Zusatzkomponente Zr sollte der Anteil c dieser Komponente mindestens 0,15 Gew.-% betragen.

Die vorgenannten Anteile der einzelnen Komponenten gewährleisten eine gute Aushärtbarkeit und somit Zugfestigkeit über den genannten Mindestwert von 500 MPa hinaus der Legierung bei einer hinreichenden Leitfähigkeit und einer genügenden Bruchdehnung des Materials.

Die nachfolgende Tabelle I zeigt die Zugfestigkeit $R_m$, die Mikrohärte HV, die Leitfähigkeit $\kappa$ und die Bruchdehnung $\varepsilon_B$ für einige Drähte aus erfindungsgemäßen Cu-Legierungen im Vergleich zu der bekannten CuAg0.1-Legierung für verschiedene Verarbeitungszustände. Zur mechanischen Charakterisierung wurden standardmäßig die Zugfestigkeit $R_m$, die sogenannte 0,01 %-Dehngrenze (= technische Elastizitätsgrenze) $R_{p0,01}$ und die Bruchdehnung $\varepsilon_B \cong A_{100}$ bei Raumtemperatur bestimmt. Dies geschah in Zerreißversuchen an 100 mm langen Drahtstücken mit meist 1 mm $\phi$ bei einer Dehngeschwindigkeit von 1 mm/min entsprechend $1,7 \times 10^{-4}$ $s^{-1}$. An Querschliffen senkrecht zur Drahtlängsrichtung wurde die Mikrohärte $HV_{50}$ bestimmt. Die elektrische Leitfähigkeit $\kappa$ wurde mit 0,2 bis 1 A Wechselstrom in Lock-in-Technik bei 370 Hz mit Hilfe einer Vierpunktmethode gemessen. Die ermittelten Leitfähigkeitswerte gelten für eine Temperatur von 20°C. Die angegebenen Eigenschaften sind bei entsprechenden Oberleitungsfahrdrähten dieselben.

Tabelle

| Legierung (in Gew.-%) | $R_m$ (MPa) | $R_{p0.01}$ (MPA) | HV (kp/mm²) | κ (%IACS) | $\varepsilon_B$ (%) | Verarbeitungszustand bzw. -folge |
|---|---|---|---|---|---|---|
| CuCr0.5In0.1 | 540 | 320 | 190 | 70,9 | 2,1 | Prozeß 1 (60 %), Prozeß 2 (450°C/30 min), Prozeß 1 (89 %), Prozeß 2 (480°C/30 min), Prozeß 1(19 %) |
| CuCr0.5In0,36Zr0,1 | 562 | 344 | 201 | 67,7 | 1,9 | Prozeß 1 (68 %), Prozeß 2 (480°C/30 min), Prozeß 1 (22 %) |
| CuCr0.5A10,15 | 520 | 378 | 188 | 65,0 | 2,0 | Prozeß 1 (68 %), Prozeß 2 (480°C/30 min), Prozeß 1 (22 %) |
| CuCr0,5A10,085Zr0,18 | 556 | 326 | 204 | 64,3 | 2,1 | Prozeß 1 (68 %), Prozeß 2 (480°C/30 min), Prozeß 1 (22 %) |
| CuCr0,5 Sn0,37Zr0,18 | 571 | 365 | 190 | 61,8 | 1,8 | Prozeß 1 (68 %), Prozeß 2 (480°C/30 min), Prozeß 1 (22 %) |
| CuCr0,5Zn0,21Zr0,18 | 511 | 301 | 195 | 68,4 | 2,0 | Prozeß 1 (68 %), Prozeß 2 (480°C/30 min), Prozeß 1 (22 %) |
| CuCr0,5Ni0,18Zr0,15 | 558 | 344 | 193 | 66,6 | 1,7 | Prozeß 1 (68 %), Prozeß 2 (480°C/30 min), Prozeß 1 (22 %) |
| CuAg0.1 | 355 | n.g. | 120 | 96,0 | 1,5 | Prozeß 1 (68 %) |

EP 0 779 372 B1

<u>Fortsetzung der Tabelle</u>

| Legierung (in Gew.-%) | $R_m$ (MPa) | $R_{p0.01}$ (MPA) | HV (kp/mm²) | $\kappa$ (%IACS) | $\varepsilon_B$ (%) | Verarbeitungszustand bzw. -folge |
|---|---|---|---|---|---|---|
| CuAg0.1 | 336 | n.g. | 112 | 96,4 | 3,6 | Prozeß 1 (31 %) |

Dabei bedeuten in der Tabelle jeweils

Prozeß 1 eine Kaltverformung

und

Prozeß 2 eine Warmauslagerung;

n.g. = nicht gemessen.

EP 0 779 372 B1

Zur Herstellung der in der Tabelle I aufgeführten Legierungen wurde von hochreinen Elementen (99,99 %) der Komponenten ausgegangen. Mit den Elementen wurden in einer Ar-Schutzgasatmosphäre zylindrische Reguli (ca. 60 g) in einem MgO-Tiegel induktiv erschmolzen und anschließend in einem Lichtbogenofen zu Barren (Länge ca. 10 bis 15 cm) umgeschmolzen. Aus den Barren wurden funkenerosiv und durch Drehen Stifte mit kreisförmigem Querschnitt (typisch 3 mm Durchmesser $\varnothing$) herausgeschnitten, wobei der beim Schmelzen gebildete Schlackesack entfernt wurde. Die Stifte wurden zunächst auf ca. 2 mm $\varnothing$ rundgehämmert und anschließend auf ca. 1,5 mm $\varnothing$ gezogen. Die Kaltumformung wurde mit kleinen Stichabnahmen von 0,1 bis 0,05 mm durchgeführt. Eine relative Querschnittsreduktion beim Kaltziehen von ca. 75 %, entsprechend einer Längung von $1/1_0 = 44$, d.h. einem Umformungsgrad $\varphi = \ln (1/1_0)$ von 1,39, konnte bei allen untersuchten Legierungen aufgrund eines hohen Kaltverformungsvermögens ohne Materialfehler erzielt werden. Die Wärmebehandlungen wurden in einem Quarzrohr unter Ar-Atmosphäre durchgeführt. Nach Auslagerungsglühungen (450 bis 500°C) wurde das Material im Quarzrohr außerhalb des Ofens relativ langsam abgekühlt.

Abweichend von den in der Tabelle I aufgeführten Cu-Legierungen sind insbesondere auch mit den folgenden, aus Tabelle II entnehmbaren erfindungsgemäßen Legierungen die genannten Zugfestigkeits- und Leitfähigkeitsbedingungen zu erfüllen, wobei der nicht-spezifizierte Cu-Anteil den Restanteil auf 100 % (unter Einschluß unvermeidbarer Verunreinigungselemente) ausmacht. Die Angaben in Tabelle II sind jeweils in Gew.-%:

Tabelle II

| Cu | Cr 0,5 | Al 0,35 | |
| Cu | Cr 0,4 | Ni 0,1 | |
| Cu | Cr 0,5 | Zn 0,2 | |
| Cu | Cr 0,5 | In 0,1 | |
| Cu | Cr 0,5 | Sn 0,2 | |
| Cu | Cr 0,6 | Al 0,2 | Zr 0,1 |
| Cu | Cr 0,4 | Ni 0,1 | Zr 0,2 |
| Cu | Cr 0,5 | Zn 0,1 | Zr 0,1 |
| Cu | Cr 0,4 | In 0,15 | Zr 0,25 |
| Cu | Cr 0,6 | Sn 0,25 | Zr 0,2 |

Die erfindungsgemäße 3-komponentige Legierung stellt selbstverständlich nur eine Basislegierung für einen Oberleitungsfahrdraht für elektrische Hochgeschwindigkeitsbahnen dar. Ein weiteres Beispiel der erfindungsgemäßen Legierung ist eine CuCr0,5Ni0,15Al0,05-Legierung.

**Patentansprüche**

1.  Fahrdraht der Oberleitung einer elektrischen Hochgeschwindigkeitsbahnstrecke, welcher aus einer 3-komponentigen, aushärtbaren $Cu_aCr_bX_c$-Legierung besteht und eine Zugfestigkeit ($R_m$) von mindestens 500 MPa und eine elektrische Leitfähigkeit ($\kappa$), bezogen auf die von geglühtem reinen Cu (International Annealed Copper Standard), von mindestens 60 % aufweist,
    wobei X ein Element aus der Gruppe der Elemente Al, Ni, Zn, In und Sn ist und für die Komponenten (jeweils in Gew.-%) gilt:

$$0,2 \leq b \leq 0,8$$

$$0,01 \leq c \leq 0,4,$$

    mit $a + b + c \cong 100$ unter Einschluß unvermeidbarer Verunreinigungselemente.

2.  Fahrdraht der Oberleitung einer elektrischen Hochgeschwindigkeitsbahnstrecke, welcher aus einer 4-komponentigen, aushärtbaren $Cu_aCr_bX_c Y$-Legierung besteht und eine Zugfestigkeit ($R_m$) von mindestens 500 MPa und eine elektrische Leitfähigkeit ($\kappa$), bezogen auf die von geglühtem reinen Cu (International Annealed Copper Standard), von mindestens 60 % aufweist,
    wobei X ein Element aus der Gruppe der Elemente Al, Ni, Zn, In und Sn ist und für die Komponenten (jeweils in

8

Gew.-%) gilt:

$$0,2 \leq b \leq 0,8$$

$$0,01 \leq c \leq 0,4,$$

mit $a + b + c \cong 100$ unter Einschluß unvermeidbarer Verunreinigungselemente, und wobei als Komponente Y vorgesehen ist:

> i) mindestens ein weiteres Element aus der Gruppe der X-Elemente zu einem Anteil unter 0,1 Gew.-%, und/oder
> ii) Zr zu einem Anteil zwischen 0,02 und 0,4 Gew.-%, vorzugsweise von höchstens 0,2 Gew.-%, und/oder
> iii) Si mit einem Anteil von höchstens 0,1 Gew.-%.

3. Draht nach Anspruch 1 oder 2, **dadurch gekennzeichnet, daß** das für die $X_C$-Komponente gilt: 0,02 Gew.-% $\leq c \leq$ 0,2 Gew.,-%, vorzugsweise $c \geq$ 0,05 Gew.-%.

4. Draht nach einem der vorangehenden Ansprüche, **dadurch gekennzeichnet, daß** für die $Cr_b$-Komponente gilt: 0,3 Gew.-% $\leq b \leq$ 0,6 Gew.-%.

5. Verfahren zur Herstellung des Oberleitungsdrahtes nach einem der vorangehenden Ansprüche, **gekennzeichnet, durch** folgende Schritte:

> a) Es wird zunächst ein Drahtvorprodukt erstellt, wobei die Cu-Legierung erschmolzen und anschließend mit einer Abkühlrate von unter 100°C/s abgekühlt wird,
> b) darauf wird das Drahtvorprodukt mittels mindestens einer Kaltverformung in ein Drahtzwischenprodukt überführt,
> c) dann wird das Drahtzwischenprodukt mindestens einer Auslagerungswärmebehandlung unterzogen,
> d) gegebenenfalls werden die Schritte b) und/oder c) mindestens noch einmal wiederholt,

> wobei mit der letzten Kaltverformung die Endform des Drahtes erzeugt wird.

6. Verfahren nach Anspruch 5, **dadurch gekennzeichnet, daß** das Drahtvorprodukt dadurch ausgebildet wird, daß zunächst ein Ausgangsprodukt aus den Elementen der Cu-Legierung mittels Erschmelzens und anschließender Abkühlung erstellt wird und dann das Ausgangsprodukt mittels mindestens einer Vorverformung in das Drahtvorprodukt überführt wird.

7. Verfahren nach Anspruch 6, **dadurch gekennzeichnet, daß** die mindestens eine Vorverformung bei einer gegenüber Raumtemperatur erhöhten Temperatur vorgenommen wird.

8. Verfahren nach Anspruch 6 oder 7, **dadurch gekennzeichnet, daß** die mindestens eine Vorverformung mittels Pressens und/oder Walzens und/oder Hämmerns vorgenommen wird.

9. Verfahren nach einem der Ansprüche 6 bis 8, **dadurch gekennzeichnet, daß** mittels der mindestens einen Vorverformung des Ausgangsproduktes ein Drahtvorprodukt gebildet wird, dessen Querschnitt eine Querschnittsreduktion durch das mindestens eine nachfolgende Kaltverformen von 50 bis 99 %, vorzugsweise von 60 bis 95 %, erforderlich macht, um den gewünschten Endquerschnitt des Drahtes zu erhalten.

10. Verfahren nach Anspruch 5, **dadurch gekennzeichnet, daß** das Drahtvorprodukt aus der Schmelze der Cu-Legierung gegossen wird.

11. Verfahren nach einem der Ansprüche 5 bis 10, **dadurch gekennzeichnet, daß** eine Abkühlung der Schmelze in Schritt a) im Temperaturbereich zwischen der Schmelztemperatur und 700°C mit einer Abkühlrate von unter 100°C/s, vorzugsweise von höchstens 20°C/s erfolgt.

**12.** Verfahren nach einem der Ansprüche 5 bis 11, **dadurch gekennzeichnet, daß** das Erschmelzen bei Schritt a) bei einer Temperatur von mindestens 1200°C vorgenommen wird.

**13.** Verfahren nach einem der Ansprüche 5 bis 12, **dadurch gekennzeichnet, daß** mindestens zwei Kaltverformungen vorgesehen werden, wobei mit der letzten Kaltverformung eine gegenüber der vorangehenden Verformung vergleichsweise geringere Querschnittsreduktion erfolgt.

**14.** Verfahren nach Anspruch 13, **dadurch gekennzeichnet, daß** mit der ersten Kaltverformung eine Querschnittsreduktion zwischen 60 und 80 % und mit der letzten Kaltverformung eine Querschnittsreduktion zwischen 10 und 30 % erfolgt.

**15.** Verfahren nach einem der Ansprüche 5 bis 14, **dadurch gekennzeichnet, daß** mit der letzten Kaltverformung das Endprodukt des Drahtes erhalten wird.

**16.** Verfahren nach einem der Ansprüche 5 bis 12, **dadurch gekennzeichnet, daß** mit einer einzigen Kaltverformung des Drahtvorproduktes die Endform des Drahtes erzeugt wird.

**17.** Verfahren nach einem der Ansprüche 5 bis 16, **dadurch gekennzeichnet, daß** wenigstens eine Kaltverformung mehrere Verformungsschritte umfaßt.

**18.** Verfahren nach Anspruch 17, **dadurch gekennzeichnet, daß** die letzte Kaltverformung mehrere Verformungsschritte umfaßt.

**19.** Verfahren nach einem der Ansprüche 5 bis 18, **dadurch gekennzeichnet, daß** die mindestens eine Kaltverformung mittels Pressens und/oder Walzens und/oder Hämmerns und/oder Ziehens vorgenommen wird.

**20.** Verfahren nach einem der Ansprüche 5 bis 19, **dadurch gekennzeichnet, daß** die mindestens eine Auslagerungswärmebehandlung bei einer Temperatur zwischen 350°C und 600°C vorgenommen wird.

**Claims**

**1.** Contact wire of the overhead line of an electric highspeed railway section that is composed of a 3-component, hardenable $Cu_aCr_bX_c$ alloy and has a tensile strength ($R_m$) of at least 500 MPa and an electric conductivity ($\kappa$), relative to that of annealed pure Cu (International Annealed Copper Standard), of at least 60%,
wherein X is an element from the group of elements comprising Al, Ni, Zn, In and Sn and the following applies to the components (in wt% in each case):

$$0.2 \leq b \leq 0.8,$$

$$0.01 \leq c \leq 0.4,$$

where $a + b + c \cong 100$, with the inclusion of unavoidable impurity elements.

**2.** Contact wire of the overhead line of an electric highspeed railway section that is composed of a 4-component, hardenable $Cu_aCr_bX_cY$ alloy and has a tensile strength ($R_m$) of at least 500 MPa and an electric conductivity (K), relative to that of annealed pure Cu (International Annealed Copper Standard), of at least 60%,
wherein X is an element from the group comprising the elements Al, Ni, Zn, In and Sn and the following apply to the components (in wt% in each case):

$$0.2 \leq b \leq 0.8,$$

$$0.01 \leq c \leq 0.4,$$

where a + b + c $\cong$ 100, with the inclusion of unavoidable impurity elements,
and wherein there is provided as component Y:

> i) at least one further element from the group comprising the X-elements in a proportion below 0.1 wt%, and/or
> ii) Zr in a proportion between 0.02 and 0.4 wt%, preferably of not more than 0.2 wt%, and/or
> iii) Si in a proportion of not more than 0.1 wt%.

3. Wire according to Claim 1 or 2, **characterized in that** the following applies to the $X_c$-component:
0.02 wt% $\leq$ c $\leq$ 0.2 wt%, preferably c $\geq$ 0.05 wt%.

4. Wire according to one of the preceding claims, **characterized in that** the following applies to the $Cr_b$-component:
0.3 wt% $\leq$ b $\leq$ 0.6 wt%.

5. Method of producing the overhead-line wire according to one of the preceding claims, **characterized by** the following steps:

> a) a stock wire product is first produced, wherein the Cu alloy is melted and then cooled at a cooling rate of less than 100°C/s,
> b) the stock wire product is thereupon converted to an intermediate wire product by means of at least one cold working,
> c) the intermediate wire product is then subjected to at least one hardening heat treatment,
> d) steps b) and/or c) are/is optionally repeated at least once more,

wherein the final form of the wire is produced by the final cold working.

6. Method according to Claim 5, **characterized in that** the stock wire product is formed **in that** a starting product is first produced from the elements of the Cu alloy by means of melting and subsequent cooling and then the starting product is converted into the stock wire product by means of at least one preliminary deformation.

7. Method according to Claim 6, **characterized in that** the at least one preliminary deformation is performed at an elevated temperature compared with room temperature.

8. Method according to Claim 6 or 7, **characterized in that** the at least one preliminary deformation is performed by means of pressing and/or rolling and/or forging.

9. Method according to one of Claims 6 to 8, **characterized in that** there is formed by means of the at least one preliminary deformation of the starting product a stock wire product whose cross section makes necessary a cross-section reduction by the at least one subsequent cold working of 50 to 99%, preferably of 60 to 95%, in order to obtain the desired final cross section of the wire.

10. Method according to Claim 5, **characterized in that** the stock wire product is cast from the melt of the Cu alloy.

11. Method according to one of Claims 5 to 10, **characterized in that** the melt is cooled in step a) in the temperature range between the melting point and 700°C at a cooling rate of below 100°C/s, preferably of not more than 20°C/s.

12. Method according to one of Claims 5 to 11, **characterized in that** the melting in step a) is performed at a temperature of at least 1200°C.

13. Method according to one of Claims 5 to 12, **characterized in that** at least two cold workings are provided, wherein a comparatively smaller cross-section reduction takes place compared with the preceding deformation by means of the final cold working.

14. Method according to Claim 13, **characterized in that** a cross-section reduction of between 60 and 80% takes place with the first cold working and a cross-section reduction of between 10 and 30% takes place with the final cold working.

**15.** Method according to one of Claims 5 to 14, **characterized in that** the end product of the wire is obtained with the final cold working.

**16.** Method according to one of Claims 5 to 12, **characterized in that** the final shape of the wire is produced with a single cold working of the stock wire product.

**17.** Method according to one of Claims 5 to 16, **characterized in that** at least one cold working comprises a plurality of deformation steps.

**18.** Method according to Claim 17, **characterized in that** the final cold working comprises a plurality of deformation steps.

**19.** Method according to one of Claims 5 to 18, **characterized in that** the at least one cold working is performed by means of pressing and/or rolling and/or forging and/or drawing.

**20.** Method according to one of Claims 5 to 19, **characterized in that** the at least one hardening heat treatment is performed at a temperature of between 350°C and 600°C.

**Revendications**

**1.** Fil de contact de l'aérien d'une ligne de chemins de fer électriques à grande vitesse, qui est constitué d'un alliage $Cu_aCr_bX_c$ à trois constituants, apte au durcissement par précipitation et qui a une résistance ($R_m$) à la traction d'au moins 500 MPa et une conductivité ($\kappa$) électrique, rapportée à celle du Cu pur recuit (International Annealed Copper Standard) d'au moins 60%,

X étant un élément choisi dans le groupe des éléments Al, Ni, Zn, In et Sn et pour les constituants on a (respectivement en % en polds) :

$$0,2 \leq b \leq 0,8$$

$$0,01 \leq c \leq 0,4,$$

avec $a + b + c \cong 100$ en y incluant des éléments inévitables d'impuretés.

**2.** Fil de contact de l'aérien d'une ligne de chemins de fer électriques à grande vitesse, qui est constitué d'un alliage $Cu_aCr_bX_cY$ à quatre constituants, apte au durcissement par précipitation et qui a une résistance ($R_m$) à la traction d'au moins 500 MPa et une conductivité ($\kappa$) électrique, rapportée à celle du Cu pur recuit (International Annealed Copper Standard) d'au molns 60%,

X étant un élément choisi dans le groupe des éléments Al, Ni, Zn, In et Sn et pour les constituants on a (respectivement en % en poids) :

$$0,2 \leq b \leq 0,8$$

$$0,01 \leq c \leq 0,4,$$

avec $a + b + c \cong 100$ en y incluant des éléments inévitables d'impuretés
et dans lequel Il est prévu comme constituant Y :

i) au moins un autre élément choisi dans le groupe des éléments X en une proportion inférieure à 0,1% en poids
et/ou
ii) Zr en une proportion comprise entre 0,02 et 0,4% en poids, de préférence d'au plus 0,2% en poids
et/ou
iii) Si en une proportion d'au plus 0,1% en poids.

**3.** Fil suivant la revendication 1 ou 2, **caractérisé en ce que**, pour le constituant $X_c$ on a :

0,02% en poids ≤ c ≤ 0,2% en poids, de préférence c ≥ 0,05% en poids.

**4.** Fil suivant l'une des revendications précédentes, **caractérisé en ce que** pour le constituant $Cr_b$ on a :

0,3% en poids ≤ b ≤ 0,6% en poids.

**5.** Procédé de fabrication du fil d'aérien suivant l'une des revendications précédentes, **caractérisé par** les stades suivants :

a) on élabore d'abord une ébauche de fil en fondant l'alliage de Cu et ensuite en le refroidissant à une vitesse de refroidissement inférieure à 100°C/s,
b) puis on transforme l'ébauche de fil au moyen d'au moins une déformation à froid en un produit intermédiaire de fil,
c) on soumet ensuite le produit intermédiaire de fil au moins à un traitement thermique de durcissement par précipitation,
d) le cas échéant on répète les stades b) et/ou c) au moins encore une fois,

la forme définitive du fil étant produite par le dernier formage à froid.

**6.** Procédé suivant la revendication 5, **caractérisé en ce que** l'ébauche de fil est constituée en élaborant d'abord un produit de départ à partir des éléments de l'alliage de Cu au moyen d'une fusion et ensuite d'un refroidissement et en transformant ensuite le produit de départ au moyen d'au moins un préformage en l'ébauche de fil.

**7.** Procédé suivant la revendication 6, **caractérisé en ce que** le au molns un préformage est effectué à une température supérieure à la température ambiante.

**8.** Procédé suivant la revendication 6 ou 7, **caractérisé en ce que** le au moins un préformage est effectué au moyen de matriçages et/ou de laminages et/ou de martelages.

**9.** Procédé suivant l'une des revendications 6 à 8, **caractérisé en ce qu'**au moyen du au moins un préformage du produit de départ il est formé une ébauche de fil dont la section transversale rend nécessaire une réduction de section transversale par le au moins un formage à froid venant ensuite de 50 à 99%, de préférence de 60 à 95%, pour obtenir la section transversale définitive souhaitée du fil.

**10.** Procédé suivant la revendication 5, **caractérisé en ce que** l'ébauche de fil est coulée à partir de l'alliage de Cu fondu.

**11.** Procédé suivant l'une des revendications 5 à 10, **caractérisé par** un refroidissement de la masse fondue au stade a) dans l'intervalle de température compris entre le point de fusion et 700°C avec une vitesse de refroidissement inférieure à 100°C/s, de préférence d'au plus 20°C/s.

**12.** Procédé suivant l'une des revendications 5 à 11, **caractérisé en ce que** la fusion s'effectue au stade a) à une température d'au moins 1200°C.

**13.** Procédé suivant l'une des revendications 5 à 12, **caractérisé en ce qu'**il est prévu au moins deux formages à froid, le demier formage à froid s'effectuant par rapport au formage précédent avec une réduction de section transversale relativement plus petite.

**14.** Procédé suivant la revendication 13, **caractérisé en ce qu'**il s'effectue par le premier formage à froid une réduction de la section transversale comprise entre 60 et 80% et par le demier formage à froid une réduction de la section transversale comprise entre 10 et 30%.

**15.** Procédé suivant l'une des revendications 5 à 14, **caractérisé en ce que** l'on obtient par le demier formage à froid le produit définitif du fil.

**16.** Procédé suivant l'une des revendications 5 à 12, **caractérisé en ce que** la forme définitive du fil est produite par un formage à froid unique de l'ébauche de fil.

**17.** Procédé suivant l'une des revendications 5 à 16, **caractérisé en ce qu'**au moins un formage à froid comprend plusieurs stades de formage.

**18.** Procédé suivant la revendication 17, **caractérisé en ce que** le dernier formage à froid comprend plusieurs stades de formage.

**19.** Procédé suivant l'une des revendications 5 à 18, **caractérisé en ce que** au moins un formage à froid est effectué au moyen de matriçages et/ou de laminages et/ou de martelages et/ou d'étirages.

**20.** Procédé suivant l'une des revendications 5 à 19, **caractérisé en ce que** le au moins un traitement thermique de durcissement par précipitation est effectué à une température comprise entre 350°C et 800°C.